Europäisches Patentamt

European Patent Office

Office européen des brevets

(19)

(11) Numéro de publication: **0 027 949**
A1

## (12) DEMANDE DE BREVET EUROPEEN

(21) Numéro de dépôt: **80106233.2**

(22) Date de dépôt: **14.10.80**

(51) Int. Cl.³: **F 01 L 31/22,** F 02 D 13/02, F 01 L 9/02

(30) Priorité: **26.10.79 FR 7926585**

(43) Date de publication de la demande: **06.05.81**
**Buiietin 81/18**

(84) Etats contractants désignés: **AT BE CH DE GB IT LI LU NL SE**

(71) Demandeur: **REGIE NATIONALE DES USINES RENAULT, Boite postale 103 8-10 avenue Emiie Zola, F-92109 Boulogne-Billancourt (FR)**

(72) Inventeur: **Chaffiotte, Pierre, 2, Parc de Béarn, F-92210 Saint-Cloud (FR)**

(74) Mandataire: **BUREAU D.A. CASALONGA, Lilienstrasse 77, D-8000 München 80 (DE)**

(54) **Distribution variable à commande hydraulique pour moteurs à combustion interne.**

(57) Distribution variable à commande hydraulique pour moteurs à combustion interne.

Distribution variable à commande hydraulique pour moteur à combustion interne, à distribution par soupapes et poussoirs hydrauliques.

Le poussoir hydraulique (3, 4, 5, 6) de chaque soupape d'admission comporte un conduit radial (15, 14) d'échappement d'huile, sur lequel est interposé un organe distributeur (10) dont le fonctionnement est asservi à celui du moteur par l'intermédiaire d'un moyen de déphasage permettant de faire varier en marche le calage dudit organe distributeur (10) par rapport au moteur, afin d'assurer, par une brusque possibilité d'évacuation de l'huile contenue dans l'alésage (5) du poussoir, une avance réglable à la fermeture de la soupape d'admission correspondante.

ACTORUM AG

1

Distribution variable à commande hydraulique pour moteurs à combustion interne.

La présente invention due à la collaboration de Monsieur Pierre CHAFFIOTTE se rapporte à une distribution variable à commande hydraulique pour moteurs à combustion interne, notamment du type à soupapes commandées par poussoirs hydrauliques.

On sait que sur les moteurs à combustion interne, la distribution est généralement établie de manière que les temps d'ouverture de soupapes d'admission et des soupapes d'échappement se chevauchent, et cela est d'autant plus souhaitable que le régime nominal du moteur est plus élevé. Ces temps définis par le profil et le calage des cames de l'arbre à cames sont établis une fois pour toutes de manière à assurer, entre autres, un remplissage optimal des cylindres au régime nominal du moteur.

Pour modifier, en cours de fonctionnement, la charge d'un moteur à combustion interne, on agit normalement sur l'ouverture du volet ou papillon d'admission des gaz commandé par la pédale d'accélérateur. Or, il est connu que pour réduire, sous charge partielle, les pertes par transvasement en gaz frais non brûlés, notamment dans les moteurs à allumage commandé et à carburation préalable, on a intérêt à réduire la charge en fermant prématurément les soupapes d'admission plutôt qu'en fermant le papillon d'admission des gaz.

L'invention a pour objet une distribution variable à commande hydraulique permettant de faire varier instantanément, en cours du marche du moteur, le point de fermeture des soupapes d'admission dans le sens d'une avance à la fermeture pour modifier la charge du moteur, sans intervenir ni sur le point d'ouverture des soupapes d'admission ni sur les points d'ouverture et de fermeture des soupapes d'échappement.

La distribution conforme à l'invention est applicable en particulier aux moteurs à combustion interne, à distribution par soupapes dont au moins les soupapes d'admission sont commandées par cames à l'aide de poussoirs hydrauliques, notamment de type connu comportant, coulissant dans un alésage fixe, deux éléments de poussoir maintenus en contact respectivement avec une came d'un arbre à cames et avec un tige de commande de soupape, sous l'action d'un ressort intermédiaire, les deux éléments de poussoir délimitant avec l'alésage précité un volume alimenté en huile sous pression, par exemple en huile de lubrification du moteur, par un canal d'alimentation débouchant dans ledit alésage.

Dans la distribution conforme à l'invention, ledit alésage renfermant le poussoir hydraulique comporte un conduit radial d'échappement d'huile, mis en communication avec ledit volume d'huile du poussoir hydraulique pendant la période d'ouverture de la soupape d'admission, conduit sur lequel est interposé un organe distributeur dont le fonctionnement est asservi à celui du moteur par l'intermédiaire d'un moyen de déphasage permettant de faire varier en cours de marche du moteur, le calage dudit organe distributeur par rapport au moteur, afin d'assurer, par une évacuation brusque de l'huile contenue dans l'alésage renfermant le poussoir, une avance réglable à la fermeture de la soupape d'admission correspondant.

Il est ainsi possible, sans agir sur le volet ou papillon d'admission des gaz, de faire varier à l'aide de moyens simples, donc fiables et de faible prix de revient, la charge d'un moteur à combustion interne par une fermeture prématurée de la ou des soupapes d'admission.

Suivant un premier de réalisation préféré de l'invention, l'organe distributeur est constitué par un boisseau tournant entraîné en rotation dans un alésage fixe par l'un des arbres tournants du moteur, notamment l'arbre à cames, et présentant un méplat latéral établissant à chaque tour, sur un angle de rotation prédéterminé, une communication entre deux parties dudit conduit d'évacuation, débouchant dans un même plan radial dans ledit alésage dans deux positions sensiblement orthogonales.

Le moyen de déphasage de l'organe distributeur par rapport au moteur est de préférence constitué par la combinaison d'une rampe hélicoïdale pratiquée à une extrémité du boisseau tournant, avec un ergot radial prévu sur l'axe d'entraînement en rotation de ce boisseau, permettant ainsi de faire varier instantanément le calage du boisseau tournant par un mouvement de translation axial imprimé audit boisseau, à l'aide d'un grain d'appui déplaçable axialement agissant dans un sens sur ledit boisseau, à l'encontre de l'action d'un moyen de rappel élastique antagoniste.

Lorsque la distribution variable à commande hydraulique suivant l'invention est appliquée à un moteur à combustion interne polycylindrique, l'organe distributeur comporte, dans son alésage et sur son boisseau tournant, autant de conduits d'évacuation et de méplats de communication, décalés suivant l'axe dudit boisseau, que le moteur possède de cylindres, les différents méplats étant décalés angulairement en fonction de l'ordre d'allumage respectif des cylindres.

Suivant un second mode de réalisation préféré de l'invention, l'organe distributeur est constitué par un électro-distributeur dont l'électro-aimant, lorsqu'il est excité par un dispositif d'alimentation électrique périodique asservi à la rotation du moteur, établit, par un déplacement longitudinal de son tiroir à l'encontre de l'action d'un moyen de rappel élastique, une communication entre deux parties dudit conduit d'évacuation, communication qui est normalement interrompue en période de repos de l'électro-aimant.

Dans ce cas, l'excitation cyclique de l'électro-aimant de l'organe distributeur peut avantageusement être pilotée par un ordinateur de bord asservi aux différents paramètres de fonctionnement du moteur en fonction des sollicitations du conducteur.

Lorsque la distribution variable à commande hydraulique suivant l'invention est appliquée à un moteur à combustion interne polycylindrique comportant un nombre pair de cylindres, l'organe distributeur comporte avantageusement un ensemble électro-distributeur par groupe de deux cylindres à point d'allumage opposé, chaque électro-aimant étant excité à chaque tour de vilebrequin, mais avec un décalage angulaire par tour de vilebrequin, par rapport à l'électro-aiamnt pré-

4

cédent et/ou suivant, correspondant à l'ordre d'allumage du cylindre du moteur.

Enfin, le positionnement de l'orifice de communication du conduit d'échappement d'huile avec l'alésage dans lequel coulissent les deux éléments du poussoir hydraulique est de préférence tel que cet orifice soit entièrement dégagé lorsque la soupape d'admission est en pleine ouverture, et soit progressivement obturé par l'élément de poussoir en contact avec la tige de commande de la soupape d'admission, en fin de fermeture de ladite soupape, afin d'amortir le retour de celle-ci sur son siège.

D'autres caractéristiques et avantages de l'objet de l'invention ressortiront également de la description ci-après de plusieurs modes de réalisation préférés d'une distribution variable à commande hydraulique conforme à l'invention pour moteurs à combustion interne, illustrés par les dessins annexés, sur lesquels :

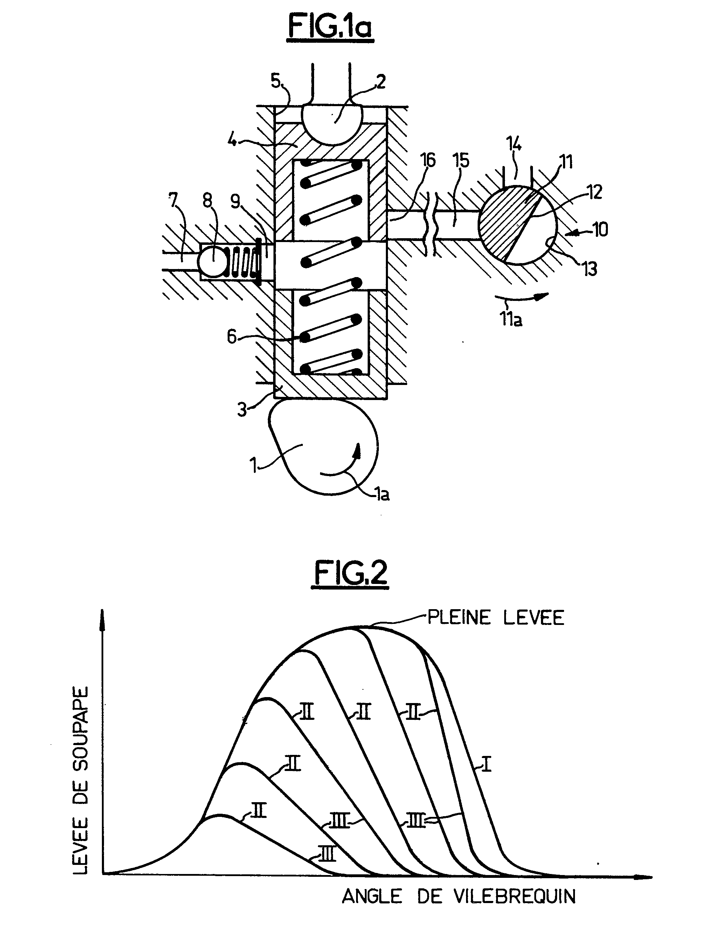

la figure 1a montre schématiquement le principe d'une distribution variable à commande hydraulique conforme à l'invention, associée à un poussoir hydraulique, et dans laquelle l'organe distributeur est un distributeur à boisseau tournant;

les figures 1a et 1f montrent les positions relatives de la came de commande d'une soupape d'admission et d'un boisseau tournant correspondant, pour différents calages de ce dernier;

la figure 2 représente les courbes de levée d'une soupape d'admission en fonction de l'angle de rotation du vilebrequin d'un moteur, pour différentes valeurs de déphasage de l'organe distributeur;

la figure 3 représente un distributeur à boisseau tournant pour un moteur à combustion interne à quatre cylindres, avec son mécanisme de déphasage.

La figure 4 représente un électro-distributeur double destiné à la commande de la distribution variable conforme à l'invention sur un moteur à combustion interne à quatre cylindres.

Sur la figure 1a, on connaît tout d'abord un poussoir hydraulique de type connu monté entre une came de distribution 1 d'un arbre à cames et la tige de commande 2 d'une soupape d'admission d'un moteur à combustion interne. Ce poussoir hydraulique comprend un plateau de came 3 en contact avec la came 1, et un poussoir de tige de commande de soupape 4 en contact avec la tige 2 de soupape (ou de culbuteur). Le plateau 3 et le poussoir 4 sont mobiles en translation axiale dans un alésage 5 ménagé, par exemple, dans la culasse du moteur. Un ressort de compression 6 est intercalé entre le plateau 3 et le poussoir 4 pour écarter le plateau 3 du poussoir 4 et maintenir le plateau 3 en contact avec la came 1 et le poussoir 4 en contact avec la tige de commande de soupape 2.

Un conduit 7 d'alimentation en huile sous pression, renfermant un clapet anti-retour 8 et relié par exemple au circuit de lubrification sous pression du moteur, débouche par un orifice 9 dans l'alésage 5. L'orifice 9 est situé de manière que lorsque le poussoir hydraulique 3,4 n'est pas soulevé par la came 1, il débouche librement dans l'alésage 5 entre le bord supérieur du plateau 3 et le bord inférieur du poussoir de tige de commande de soupape 4.

Le poussoir de soupape hydraulique tel que décrit jusqu'à présent fonctionne de la manière suivante :

lorsque la came 1 soulève le plateau 3, l'huile emprisonnée entre le plateau 3 et le poussoir 4, en raison de la faible compressibilité de l'huile et de la fermeture automatique du clapet 8, entraîne le poussoir 4 et lève ainsi la soupape de son siège, à l'encontre de la force de rappel du ressort de soupape non représenté. Au cours de cette montée ainsi qu'au cours de la descente subséquente du poussoir hydraulique, entraînant le retour de la soupape sur son siège, sous l'action du ressort de soupape, une faible quantité d'huile s'échappe entre l'alésage 5, d'une part, et le plateau 3 et le poussoir 4, d'autre part, sous l'action de la force du ressort de soupape et des effets d'inertie. Le plateau 3 et le poussoir 4 se rapprochent donc quelque peu l'un de l'autre, à l'encontre de la force du ressort de compensation 6. Dès que la soupape a atteint son siège et que le ressort de soupape n'agit donc plus sur le poussoir hydraulique, le ressort de compensation 6 écarte de nouveau la plateau 3 du poussoir 4, pour maintenir le plateau 3 en contact avec le noyau de la came 1, ce qui fait qu'une faible quantité d'huile destinée à compenser les pertes qui se sont produites pendant le déplacement du poussoir de soupape pénètre par le clapet 8 entre le plateau 3 et le poussoir 4.

Ce mode de fonctionnement correspond à celui d'un poussoir hydraulique classique.

Dans la distribution variable conforme à la présente invention, un distributeur 10 dont le fonctionnement est asservi à celui du moteur est associé au poussoir hydraulique de chaque soupape d'admission. Dans l'exemple de la figure 1a, le distributeur 10 est un distributeur à boisseau tournant 11 entraîné par l'arbre à cames, à la même vitesse que celui-ci, dans le sens de la flèche 11a qui correspond au sens de rotation (flèche 1a) de l'arbre à cames. Le boisseau tournant 11 présente un méplat 12 constituant la corde d'un arc de moins de 180°. Le boisseau 11 tourne dans un alésage cylindrique 13 fixe, ménagé par exemple dans la culasse du moteur. Dans l'alésage 13 débouchent, sensiblement à 90° l'un de l'autre, deux conduits radiaux 14 et 15. Le conduit 14 est un conduit de décharge menant, par exemple, dans le carter d'huile du moteur. Le conduit 15 est un conduit de transfert et communique radialement par un orifice 16 avec l'alésage 5 renfermant le poussoir hydraulique.

On reconnaît sur la figure 1a que dans la position représentée, où le poussoir hydraulique n'est pas soulevé par la came 1, l'orifice 16 est obturé par le poussoir de queue de soupape 4.

Le distributeur 10 comporte un dispositif qui sera décrit par la suite et qui permet de faire varier, pendant la marche du moteur, le calage du boisseau tournant 11 par rapport à l'arbre à cames.

Pour expliquer le fonctionnement de la distribution variable telle que décrite jusqu'à présent, on va se référer

aux figures 1a à 1f qui représentent la came 1 et le boisseau tournant 11 du distributeur 10 pour différents calages dudit boisseau par rapport à la came 1.

Les figures 1a et 1b illustrent le calage qui correspond au fonctionnement normal du poussoir hydraulique, c'est-à-dire sans intervention du distributeur 10. Sur la figure 1b, on reconnaît la came 1 à l'instant où elle commence à soulever le poussoir. Dans cette position, le boisseau 11 du distributeur obture le conduit 14, ce qui fait qu'aucune décharge d'huile ne peut avoir lieu par les conduits 15 et 14. Pendant la rotation ultérieure de la came 1 et du boisseau 11, jusqu'à la position illustrée par le figure 1a, qui correspond à la fin de la descente du poussoir hydraulique, aucune communication ne s'établit entre les conduits 15 et 14, de sorte que le poussoir hydraulique se comporte comme un poussoir hydraulique normal selon le mode de fonctionnement décrit précédemment.

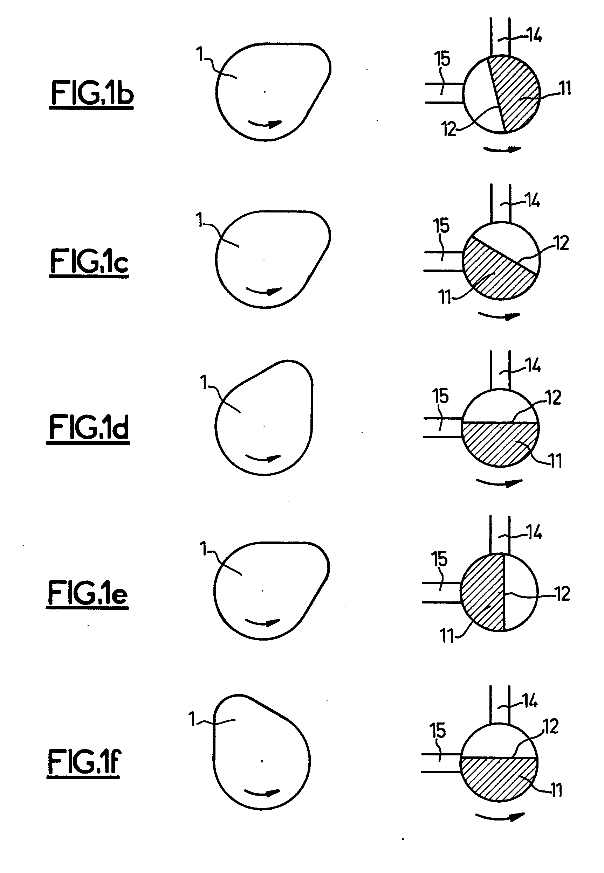

Les figures 1c et 1d montrent la came 1 et le boisseau 11 du distributeur, le boisseau 11 étant décalé par rapport à la came 1 de manière à établir une communication entre les conduits 15 et 14, au cours de la levée de la soupape. Dans la position selon la figure 1c, qui correspond de nouveau à l'instant auquel la came 1 commence à soulever le poussoir, le boisseau 11 a déjà dégagé le conduit 14, mais obture encore le conduit 15. La came 1 commence donc à lever normalement la soupape jusqu'à la position selon la figure 1d où le boisseau 11 du distributeur dégage également le conduit 15 et permet ainsi un échappement, par le conduit de décharge 14, de l'huile contenue dans le poussoir hydraulique. La soupape revient alors brusquement sur son siège, sous l'action de son ressort, malgré que le plateau 3 soit encore maintenu soulevé par la came 1, et reste fermée jusqu'à la levée au tour suivant de la came 1.

Les figures 1e et 1f illustrent un cas où le boisseau 11 du distributeur est décalé de manière à établir une communication entre les conduits 15 et 14 en cours de fermeture de la soupape. On reconnaît sur la figure 1e qui montre la came 1 et le boisseau 11 dans la position correspondant au début de la levée de la soupape, que le boisseau 11 du distributeur obture à ce moment le conduit 15 et vient tout juste de dégager le conduit 14. Le conduit 15 reste obturé jusqu'à la position selon la figure 1f dans laquelle la came 1 a commencé à laisser revenir la soupape vers son siège et dans laquelle le boisseau 11 du distributeur commence à dégager le conduit 15 tout en maintenant dégagé le conduit 14. L'huile contenue dans le poussoir hydraulique s'échappe alors par les conduits 15 et 14 communiquant l'un avec l'autre, de sorte que la soupape, sous l'action de son ressort, revient brusquement sur son siège alors que le plateau de came 3 reste encore soulevé par la came 1.

Il apparaît donc que selon le calage du boisseau 11 du distributeur 10 par rapport à la came 1, la distribution variable conforme à l'invention permet, soit de conserver au poussoir hydraulique sa fonction normale, soit d'avancer à volonté l'instant de fermeture de la soupape d'admission.

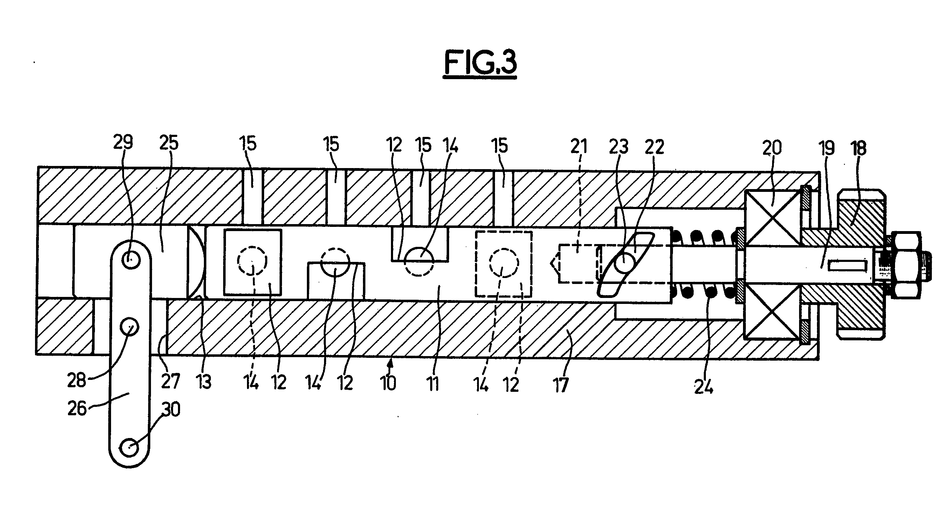

La figure 2 qui montre les levées de soupape en fonction de l'angle de rotation du vilebrequin du moteur permet de reconnaître la courbe normale de levée de soupape I donnée par la loi de came, tant en l'absence de conduits 15, 14 et de distributeur 10 selon l'invention qu'en cas de calage du boisseau 11 du distributeur de manière que ce dernier n'intervienne pas dans le fonctionnement normal du poussoir hydraulique. Les courbes II sont pour une vitesse constante les courbes de descente de la soupape en fonction du décalage du boisseau 11 du distributeur par rapport à l'arbre à cames. La partie inférieure III des courbes de descente II est modifiée par l'obturation progressive de l'orifice 16 du conduit 15 en fin de descente du poussoir 4, amortissant la fin de course de fermeture de la soupape d'admission pour empêcher que celle-ci ne vienne marteler son siège en fin de descente, donc pour assurer un retour sans choc de la soupape sur son siège. Ce freinage est donc conditionné par le positionnement de l'orifice 16 dans l'alésage 5 par rapport à la limite inférieure de débattement de l'élément poussoir 4. De même le profil de l'orifice 16 ainsi que le profil du bord inférieur du poussoir 4 déterminent l'allure de la courbe de freinage.

Il convient également de noter que la pente des courbes de descente de soupape II est fonction de la configuration du conduit 15. Plus la section de ce conduit 15 est importante, plus la pente des courbes de descente II est forte.

La variation du calage du boisseau 11 du distributeur 10 par rapport à l'arbre à cames peut se faire de différentes manières.

Il est possible, par exemple, d'utiliser un dispositif différentiel classique intercalé dans la transmission de mouvement entre le boisseau du distributeur et l'arbre à cames par lequel est entraîné ce boisseau.

La figure 3 représente un moyen plus simple pour faire varier ce calage, compte tenu des dimensions réduites du distributeur et de la très faible puissance nécessaire à son entraînement.

On reconnaît sur cette figure 3 un distributeur 10 conçu pour un moteur à quatre cylindres. Un corps 17 dans lequel est pratiqué l'alésage cylindrique 13 recevant le boisseau tournant 11 présente quatre conduits de transfert 15 et quatre conduits de décharge 14. Chaque conduit de transfert 15 est relié, de la manière visible sur la figure 1a, au poussoir hydraulique de l'une des quatre soupapes d'admission du moteur.

Pour assurer la communication respective des quatre conduits de transfert 15 et des quatre conduits de décharge 14, le boisseau 11 présente quatre méplats 12 décalés suivant son axe longitudinal. Les quatre méplats 12 sont également décalés angulairement de 90° les uns par rapport aux autres, en fonction de l'ordre d'allumage des différents cylindres.

L'entraînement du boisseau tournant 11 s'effectue par une courroie crantée non représentée passant sur une poulie crantée 18 clavetée sur une extrémité d'un axe 19 tournant dans un roulement 20 immobilisé axialement dans le corps 17 (en cas d'entraînement du boisseau 11 par engrenages, la poulie 18 peut être remplacée par un pignon). L'autre extrémité de l'axe 19 est engagé à coulissement dans un trou borgne axial 21 ménagé dans une extrémité du boisseau 11. Une fente 22 formant une rampe hélicoïdale est pratiquée dans le boisseau 11, au voisinage de l'extrémité creuse de ce dernier. Un ergot radial 23 prévu sur l'axe 19 dans sa partie engagée dans le trou borgne 21 du boisseau 11 pénètre dans la fente 22. Un ressort de compression 24 est intercalé entre l'extrémité creuse du boisseau 11 et la bague intérieure du roulement 20.

Un grain 25 déplaçable en translation axiale dans l'alésage 13 du corps 17 est appuyé contre l'extrémité opposée du boisseau 11 sous l'action d'un levier pivotant 26 pénétrant radialement dans l'alésage 13 par une lumière radiale 27 du corps 17. Le levier 26 est articulé, entre ses deux extrémités, par un axe 28 sur le corps 17. Son extrémité située à l'intérieur de l'alésage 13 est articulée par un axe 29 sur le grain 25.

On reconnaît qu'en agissant sur l'extrémité extérieure 30 du levier 26 pour faire pivoter ce dernier autour de l'axe 29, il est possible de provoquer le déplacement axial du grain 25 donc du boisseau 11 contre l'action du ressort 24, et inversement, ce qui, du fait de la liaison entre le boisseau 11 et l'axe 19 par la rampe 22 et l'ergot 23, se traduit par une variation du calage angulaire du boisseau 11 par rapport à l'axe 19. Le ressort 24 doit être dimensionné de manière à maintenir le boisseau 11 en contact permanent avec le grain 25 et à compenser les jeux axiaux de l'ensemble mobile.

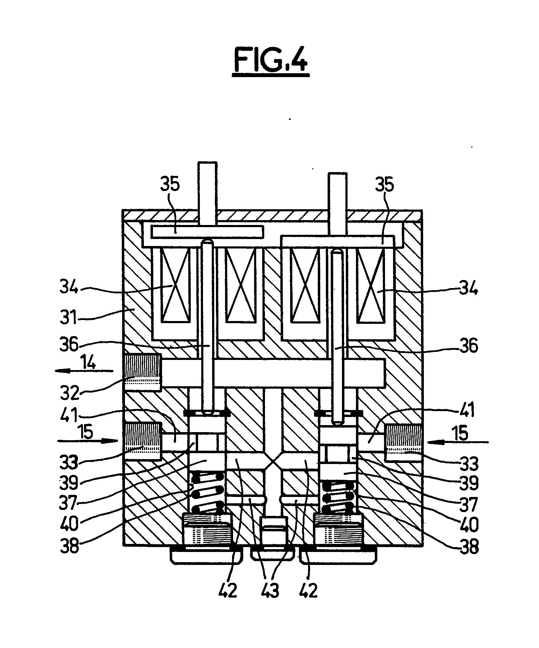

Un autre mode de réalisation de distributeur est illustré par la figure 4. Dans ce mode de réalisation, on utilise, non pas un distributeur mécanique à boisseau tournant et à variation mécanique du calage du boisseau par rapport à l'arbre à cames, mais un électro-distributeur double commandant l'avance réglable à la fermeture des quatre soupapes d'admission d'un moteur à quatre cylindres.

Le corps commun 31 de l'électro-distributeur double présente une sortie 32 commune pour les deux électro-distributeurs et deux entrées 33 dont chacune est associée à l'un des électro-distributeurs. Chaque électro-distributeur possède un électro-aimant 34 avec une armature 35 commandant, par une tige 36, un tiroir 37 sollicité par un ressort de rappel 38. Chaque tiroir 37 possède une gorge circonférentielle centrale 39. L'entrée 33 de chaque électro-distributeur débouche par un orifice 41 dans un alésage 40 dans lequel est monté mobile en translation axiale le tiroir 37 de l'électro-distributeur correspondant. La sortie commune 32 de l'électro-distributeur double est reliée par un orifice 42 à l'alésage 40 de chacun des deux électro-distributeurs. Sur chaque électro-distributeur, les deux orifices 41 et 42 débouchent dans l'alésage 40 dans des positions décalées tant axialement que circonférentiellement. Le décalage axial des deux orifices 41 et 42 est tel que dans la position désexcitée du distributeur, le tiroir 37 empêche toute communication entre les deux orifices 41 et 42 et que dans la position excitée, la gorge 39 établit une communication entre les orifices 41 et 42, donc entre l'entrée 33 et la sortie 32.

Afin d'assurer l'indifférence des tiroirs 37 à la pression d'huile régnant dans les conduits de transfert 15 reliés aux entrées 33, c'est-à-dire entre le plateau de came 3 et le poussoir 4 de tige 2 de commande de soupape du poussoir hydraulique de la figure 1a, les deux faces d'extrémité des tiroirs 37 communiquent en permanence avec la sortie commune 32 par des canaux d'équilibrage 43 d'une part et par les alésage 40 d'autre part qui débouchent conjointement directement dans la sortie 32.

Les deux électro-distributeurs représentés suffisent pour agir sur les soupapes d'admission d'un moteur à quatre cylindres. L'entrée 33 de chaque électro-distributeur est reliée aux conduits de transfert 15 de deux poussoirs hydrauliques, par exemple des poussoirs hydrauliques des cylindres n° 1 et 4, pour l'un des électro-distributeurs, et des cylindres n° 2 et 3, pour l'autre électro-distributeur. Chaque électro-dis-

12

tributeur est alors excité à chaque tour de vilebrequin, mais avec un décalage d'un demi-tour de vilebrequin entre les deux électro-distributeurs.

Sur la figure 4, l'électro-aimant 34 du distributeur de gauche est désexcité, de sorte que le tiroir 37 de cet électro-distributeur est amené, par le ressort de rappel 38, dans la position dans laquelle la gorge 39 n'établit pas de communication entre les orifices 41 et 42, c'est-à-dire entre l'entrée 33 et la sortie 32. Par contre, dans l'électro-distributeur de droite dont l'électro-aimant 34 est excité de sorte que l'armature 35 se trouve attirée contre la culasse de l'aimant 34, la tige 36 a amené le tiroir 37 dans la position dans laquelle la gorge 39 fait communiquer l'orifice 41 avec l'orifice 42, donc l'entrée 33 avec la sortie 32. Les conduits de transfert 15 reliés à l'entrée 33 permettent donc l'échappement de l'huile contenue dans les deux poussoirs hydrauliques des deux soupapes d'admission correspondantes, à travers le conduit de décharge 14.

La commande des deux électro-distributeurs, c'est-à-dire l'excitation périodique de leurs électro-aimants, peut être assurée avantageusement par un ordinateur de bord du véhicule, programmé pour piloter l'instant de fermeture des soupapes d'admission selon les différents paramètres de fonctionnement du moteur en fonction des sollicitations du conducteur, par déphasage de leur période d'excitation, selon le principe décrit pour les modes de réalisation précédents. Il serait cependant possible d'obtenir le même résultat en faisant varier la durée de la période d'excitation, c'est-à-dire de choisir une période d'excitation qui se termine toujours à un angle de rotation fixe de l'arbre à cames, correspondant à un instant postérieur à l'instant de fermeture de la soupape en absence de la distribution variable conforme à l'invention, et d'avancer ou de reculer le début de cette période d'excitation selon l'avance souhaitable à la fermeture des soupapes d'admission.

Il va de soi que de nombreuses modifications et variantes sont possibles dans le cadre de la présente invention. Ainsi, l'invention est applicable également à des moteurs à

13

commande des soupapes par culbuteurs, auquel cas les poussoirs hydrauliques sont montés, par exemple, entre l'arbre à cames et les culbuteurs ou les tiges des culbuteurs.

Les poussoirs hydrauliques peuvent également être d'un autre type que celui représenté et décrit, à condition que leur principe de fonctionnement soit le même et qu'il soit possible de leur adjoindre un conduit de décharge permettant la commande conforme à l'invention. Enfin, le distributeur tournant peut être entraîné par un arbre du moteur autre que l'arbre à cames.

14

## REVENDICATIONS

1. Distribution variable à commande hydraulique pour moteurs à combustion interne, à distribution par soupapes dont au moins les soupapes d'admission sont commandées par cames à l'aide de poussoirs hydrauliques, notamment du type comprenant, coulissant dans un alésage fixe, deux éléments de poussoir maintenus en contact respectivement avec une came d'un arbre à cames et avec une tige de commande de soupape, sous l'action d'un ressort intermédiaire, les deux éléments de poussoir délimitant avec l'alésage précité un volume alimenté en huile sous pression par un canal d'alimentation débouchant dans ledit alésage, lequelcomporte un conduit radial d'échappement d'huile, mis en communication avec ledit volume d'huile du poussoir hydraulique pendant la période d'ouverture de la soupape d'admission, et sur lequel est interposé un organe distributeur dont le fonctionnement est asservi à celui du moteur par l'intermédiaire d'un moyen de déphasage permettant de faire varier, pendant la marche du moteur, le calage dudit organe distributeur par rapport au moteur, afin d'assurer, par une évacuation brusque de l'huile continue dans l'alésage du poussoir, une avance réglable à la fermeture de la soupape d'admission correspondante, caractérisée par le fait que l'organe distributeur (31) est constitué par un électro-distributeur dont l'électro-aimant (34), lorsqu'il est excité par un dispositif d'alimentation électrique périodique asservi à la rotation du moteur, établit, par un déplacement longitudinal de son tiroir (37) à l'encontre de l'action d'un moyen d'un rappel élastique (38), une communication entre deux parties (15,14) dudit conduit d'évacuation, communication qui est normalement interrompue en période de repos de l'électro-aimant (34).

2. Distribution variable selon la revendication 1, caractérisée par le fait que l'excitation cyclique de l'électro-aimant (34) de l'organe distributeur (31) est pilotée par un ordinateur de bord asservi aux différents paramètres de fonctionnement du moteur en fonction des sollicitations du conducteur.

3. Distribution variable selon l'une quelconque des revendications 1 et 2, destinée à un moteur à combustion interne polycylindrique comportant un nombre pair de cylindres, caractérisée par le fait que l'organe distributeur (31) comprend un ensemble électro-distributeur (34,37) par groupe de deux cylindres à point d'allumage opposé, chaque électro-aimant (34) étant excité à chaque tour de vilebrequin, mais avec un décalage angulaire par tour de vilebrequin, par rapport à l'électro-aimant (34) précédent et/ou suivant, correspondant à l'ordre d'allumage des cylindres du moteur.

1/4

## FIG.1a

## FIG.2

PLEINE LEVEE

LEVEE DE SOUPAPE

ANGLE DE VILEBREQUIN

FIG.1b

FIG.1c

FIG.1d

FIG.1e

FIG.1f

# FIG.3

0027949

## FIG.4

**Office européen des brevets**

**RAPPORT DE RECHERCHE EUROPEENNE**

Numéro de la demande EP 80 10 6233

| Catégorie | DOCUMENTS CONSIDERES COMME PERTINENTS — Citation du document avec indication, en cas de besoin, des parties pertinentes | Revendica- tion concernée |
|---|---|---|
| X | US - A - 4 009 695 (ULE) <br> * Figures 1-3; colonne 9, ligne 60 - colonne 14, ligne 33 * | 1-3 |
| | FR - A - 2 392 225 (LUCAS) <br> * Figures 1,2; page 5, ligne 1 - page 6, ligne 5 * | 1 |
| A | GB - A - 1 498 460 (NISSAN) <br> * Page 6, lignes 84-120 * | 1 |
| A | US - A - 4 133 332 (TORRINGTON) <br> * Colonne 1, lignes 1-59 * | 1 |
| A | US - A - 2 394 738 (ANTHONY) | 1 |
| A | DE - A - 2 813 132 (KHD) <br> * Page 1, alinéa 1 - page 2, alinéa 5 * | 1 |
| | FR - A - 2 110 031 (BOSCH) <br> * Page 8, lignes 1-23 * | 1 |

**CLASSEMENT DE LA DEMANDE (Int. Cl. 3)**

F 01 L 31/22
F 02 D 13/02
F 01 L  9/02

**DOMAINES TECHNIQUES RECHERCHES (Int. Cl. 3)**

F 01 L
F 02 D

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X Le présent rapport de recherche a été établi pour toutes les revendications

| Lieu de la recherche | Date d'achèvement de la recherche | Examinateur |
|---|---|---|
| La Haye | 27-01-1981 | WASSENAAR |

OEB Form 1503.1   06.78